# FASCICULE DE BREVET EUROPEEN

(11) **EP 0 650 425 B1**
(45) Date de publication et mention de la délivrance du brevet: **24.01.1996**
(21) Numéro de dépôt: 93914780.7
(22) Date de dépôt: 30.06.1993
(51) Int. Cl.: B60T 7/12, B60T 11/10, B60T 13/57

(54) **DISPOSITIF PNEUMATIQUE DE RETENUE DE COTE**
PNEUMATISCHE RÜCKROLLSPERRVORRICHTUNG
PNEUMATIC DEVICE FOR HOLDING A VEHICLE ON A SLOPE

(30) Priorité: 22.07.1992 FR 9209024
(43) Date de publication de la demande: 03.05.1995
(73) Titulaire: ALLIEDSIGNAL EUROPE SERVICES TECHNIQUES, F-93700 Drancy (FR)
(72) Inventeur: CASTEL, Philippe, F-75005 Paris (FR); PRESSACO, Pierre, F-93120 La Courneuve (FR); LEVRAI, Roland, F-93240 Stains (FR)
(74) Mandataire: Bentz, Jean-Paul
(86) Numéro de dépôt international: FR9300655
(87) Numéro de publication internationale: WO9402339

(56) Documents cités:
- EP-A- 0 221 299
- US-A- 4 893 691

## Description

La présente invention concerne un dispositif de freinage pour véhicule à moteur, notamment doté d'une pédale de frein et d'un servomoteur pneumatique d'assistance, ce dernier comprenant lui-même :
- des première et seconde chambres séparées de façon étanche par une paroi mobile et raccordées, de façon permanente pour la première et de façon sélective par actionnement de la pédale pour la seconde, à des première et seconde sources de pression respectives délivrant des pressions présentant une différence non nulle, l'actionnement de la pédale permettant de faire apparaître un travail d'assistance au freinage résultant d'un déplacement de la paroi mobile sous l'effet de cette différence de pression ;
- des premiers moyens de valve commandés par la pédale pour établir une communication sélective entre les deux chambres, cette communication étant interrompue dès le début de chaque actionnement de la pédale et rétablie seulement à la fin de son relâchement ;
- des seconds moyens de valve commandés par la pédale pour établir une communication sélective entre la seconde chambre et la seconde source de pression, cette communication étant établie au cours de chaque actionnement de la pédale et interrompue dès le début de son relâchement ; et
- des troisièmes moyens de valve montés en série avec les premiers moyens de valve et propres à établir une communication sélective supplémentaire entre les chambres.

Des dispositifs de ce type sont par exemple connus des documents EP-A-0 171 585, EP-A-0 173 054 et EP-0 201 689, incorporés par référence à la présente description.

En dépit de leur intérêt, ces dispositifs de l'art antérieur ont nécessairement recours, pour constituer les troisièmes moyens de valve, à une électrovalve dont le coût relativement élevé en limite considérablement le champ d'application.

La présente invention a notamment pour but de contourner cette difficulté et y parvient en proposant un dispositif dans lequel les troisièmes moyens de valve comprennent une valve inclinométrique sensible à l'inclinaison du véhicule pour interdire, au moins pour un sens et une amplitude déterminés d'inclinaison du véhicule, la communication entre les deux chambres.

Ce dispositif, généralement destiné à un véhicule à moteur équipé d'un mécanisme d'embrayage, peut alors avantageusement comprendre en outre des moyens de commande sensibles à un mouvement de ce mécanisme d'embrayage pour provoquer l'ouverture des troisièmes moyens de valve en réponse à ce mouvement.

Bien que l'utilisation de valves inclinométriques actionnées par la pédale d'embrayage pour retenir un véhicule en pente soit connue, par exemple par les brevets US 2 030 288 et US 2 251 787 eux-mêmes incorporés ici par référence, ces valves n'étaient jusqu'à présent utilisées que sur le circuit hydraulique de freinage, avec l'inconvénient de devoir résister à des pressions élevées, de devoir être prévues en double pour un double circuit de freinage, et de rendre le défreinage du véhicule très fortement et brutalement sensible au relâchement de la pédale d'embrayage, l'ensemble de ces inconvénients étant également éliminés par la présente invention.

En particulier, la faible différence de pression existant de part et d'autre d'un dispositif pneumatique (quelques bars maximum, usuellement moins de un bar), en comparaison d'un dispositif hydraulique ainsi que la mise en oeuvre d'un circuit simple au lieu de double induisent une sensibilité, donc une perturbation, très réduite à la pédale d'embrayage.

D'autre part, le dispositif proposé peut être mise en oeuvre de façon très simple, sans tuyauterie additionnelle externe.

D'autres caractéristiques et avantages de cette dernière ressortiront clairement de la description qui en est faite ci-après, à titre indicatif et nullement limitatif, en référence au dessin annexé dans lequel :

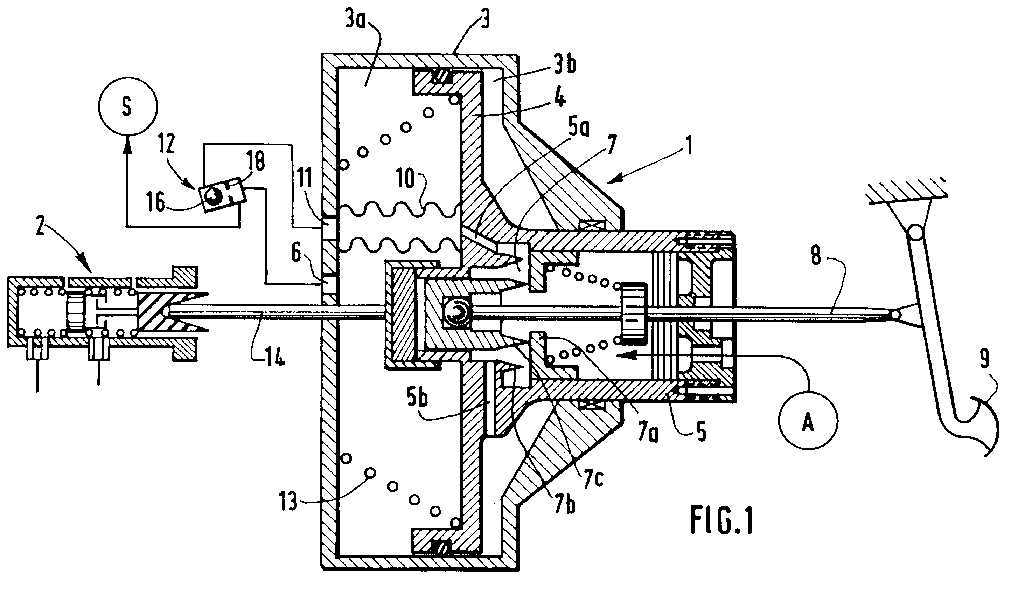

- La Figure 1 est une vue schématique en coupe d'un système de freinage utilisant l'invention ;
- La Figure 2 est une vue en coupe d'une valve inclinométrique utilisable dans un dispositif conforme à l'invention ; et
- La Figure 3 est une vue en coupe partielle d'un servomoteur pneumatique d'assistance représentant, en vue de côté, la valve illustrée à la Figure 2.

Dans la mesure où l'invention ne concerne qu'un perfectionnement apporté aux systèmes de freinage à assistance pneumatique, et où la constitution générale et le fonctionnement de ces derniers sont bien connus de l'homme de l'art, ces systèmes ne seront rapidement rappelés ici que pour permettre une compréhension totale du perfectionnement que représente l'invention.

Schématiquement, un système de ce type comprend un servomoteur 1 et un maître-cylindre 2.

Le servomoteur comprend lui-même une enveloppe rigide 3 séparée en deux chambres 3a et 3b, de façon étanche, par une paroi 4 solidaire d'un piston pneumatique 5 mobile à l'intérieur de l'enveloppe.

La chambre avant 3a, dont la face avant est en réalité fermée de façon étanche par le maître-cylindre 2, est en permanence raccordée à une source de dépression S (non représentée) au travers d'une première ouverture 6 de l'enveloppe 3.

La pression dans la chambre arrière 3b est contrôlée par un clapet 7, commandé par une tige de commande 8, laquelle est reliée à la pédale de frein 9.

Le clapet 7 comprend en fait un joint annulaire 7a susceptible de coopérer avec un premier siège annulaire 7b solidaire du piston et avec un second siège annulaire 7c solidaire de la tige de commande 8.

Lorsque cette dernière est en position de repos, en l'occurrence tirée vers la droite, la valve constituée par le joint 7a et le siège 7b est ouverte et établit normalement une communication entre les chambres 3a et 3b du servomoteur au travers d'un conduit 5a du piston et d'un soufflet 10 reliant ce conduit à une seconde ouverture 11 de l'enveloppe 3, laquelle est elle-même raccordée à la première ouverture 6 par l'intermédiaire d'une valve inclinométrique pneumatique 12, spécifique de l'invention et qui sera pour l'instant supposée ouverte.

La chambre arrière 3b étant alors soumise à la même dépression que la chambre avant 3a, le piston 5 est repoussé vers la droite, en position de repos, par un ressort 13.

L'actionnement de la tige de commande vers la gauche (freinage) a d'abord pour effet d'isoler l'une de l'autre les chambres 3a et 3b par application du joint 7a sur le premier siège 7b, puis d'ouvrir la chambre arrière 3b à la pression atmosphérique A, à travers un conduit 5b, par ouverture de la seconde valve, c'est-à-dire par séparation du joint 7a et du second siège 7c.

La différence de pression entre les deux chambres alors ressentie par la paroi 4 exerce sur le piston 5 une force d'assistance au freinage qui se superpose à la force exercée par la pédale. L'effort résultant déplace ce piston vers la gauche en comprimant le ressort 13 et en entraînant une tige de poussée 14 actionnant le maître-cylindre 2.

Le relâchement de la pédale 9 provoque d'abord la fermeture de la seconde valve 7a, 7c, la chambre arrière 3b se trouvant dès lors isolée de l'atmosphère, puis l'ouverture de la première valve 7a, 7b.

Comme la valve inclinométrique 12 est montée en série avec la première valve 7a, 7b, l'ouverture de cette première valve ne permet aux chambres avant 3a et arrière 3b de communiquer entre elles que si la valve inclinométrique 12 est ouverte.

En conséquence, si la valve 12 est ouverte, la chambre arrière 3b communique avec la source de dépression S et la paroi 4 est ramenée en position de repos, sur la droite, par le ressort 13.

En revanche, si la valve 12 est fermée, la différence de pression entre les chambres avant et arrière est maintenue et la force d'assistance au freinage exercée par le servomoteur continue d'être exercée sur le maître-cylindre 2 par l'intermédiaire de la tige de poussée 14.

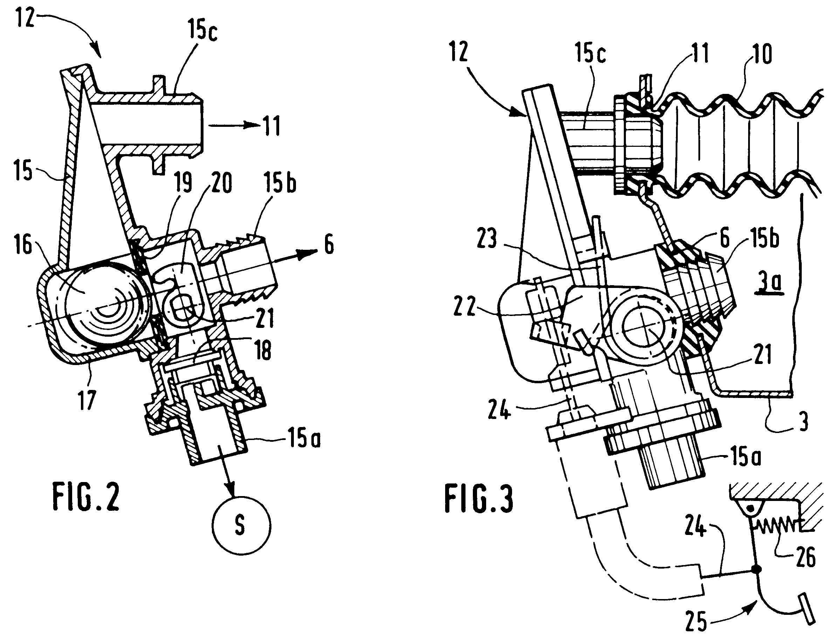

La valve inclinométrique 12, représentée en détail sur les figures 2 et 3, comprend un corps étanche 15 renfermant une bille 16 contrainte à rouler sur un plan 17 légèrement incliné vers l'avant du véhicule lorsque ce dernier est horizontal, et incliné vers l'arrière lorsque le véhicule gravit une côte.

Le corps 15 est conformé de manière à présenter trois conduits de branchement 15a, 15b et 15c, permettant de le raccorder respectivement à la source de dépression S et aux première et seconde ouvertures 6 et 11 de l'enveloppe rigide 3.

Un clapet anti-retour 18 est disposé entre les conduits 15b et 15a pour n'autoriser le passage de l'air que du premier 15b de ces conduits, vers le second 15a, et un siège de clapet annulaire 19 est disposé entre les conduits 15b et 15c.

En côte, la bille 16 s'applique par gravité sur le siège 19 qu'elle obture, interrompant ainsi la communication qui, en d'autres circonstances, se trouve établie entre les conduits 15b et 15c.

Un levier 20 monté à rotation à l'intérieur du corps 15 au moyen d'un axe 21 est susceptible de traverser l'espace central du siège 19 pour repousser la bille 16 à distance de ce dernier et rétablir ainsi la communication entre les conduits 15b et 15c.

Comme le montre la Figure 2, l'axe 21 est solidaire en rotation d'un levier externe 22 susceptible d'être tiré, à l'encontre d'une force de rappel exercée par un ressort 23, par un câble 24 relié à la pédale d'embrayage 25 elle-même sollicitée vers sa position de repos par un puissant ressort 26.

Aussi longtemps que la pédale d'embrayage n'est pas enfoncée, le levier 20 traverse le siège 19 et interdit à la bille 16 d'interrompre la communication entre les conduits 15b et 15c.

En revanche, si le véhicule est arrêté dans une côte et la pédale d'embrayage enfoncée, la bille 16 s'applique sur le siège 19 jusqu'à interrompre cette communication, et le véhicule est alors freiné, même après relâchement du frein, aussi longtemps que la pédale d'embrayage 25 n'est pas relâchée.

Comme le comprendra l'homme de l'art, le câble 24 pourrait être remplacé par tout équivalent fonctionnel, par exemple par un poussoir électrique déclenché par le mouvement de la pédale d'embrayage ou le mouvement de tout autre mécanisme d'embrayage.

Le mouvement de la bille 16 est avantageusement amorti, du côté opposé au siège 19, par tout moyen approprié pour éviter les bruits.

Un détecteur de position, par exemple un contact électrique ou un capteur à effet Hall, peut être utilisé pour détecter la position de l'un des organes mobiles associés au fonctionnement de la valve 12 et permettre l'allumage d'un voyant signalant la mise en fonction de cette valve.

Enfin, bien que la valve 12 ait été décrite comme solidaire de l'enveloppe rigide 3, elle pourrait continuer de remplir sa fonction essentielle en étant implantée ailleurs, par exemple sur la paroi mobile 4, pourvu que son inclinaison reste liée à celle du véhicule.

## Revendications

1. Dispositif de freinage pour véhicule à moteur, notamment doté d'une pédale de frein (9) et d'un servomoteur pneumatique d'assistance (1), ce dernier comprenant lui-même :
- des première et seconde chambres (3a, 3b) séparées de façon étanche par une paroi mobile (4) et raccordées, de façon permanente pour la première et de façon sélective par actionnement de la pédale pour la seconde, à des première et seconde sources de pression respectives (S, A) délivrant des pressions présentant une différence non nulle, l'actionnement de la pédale permettant de faire apparaître un travail d'assistance au freinage résultant d'un déplacement de la paroi mobile sous l'effet de cette différence de pression ;
- des premiers moyens de valve (7a, 7b) commandés par la pédale pour établir une communication sélective entre les deux chambres, cette communication étant interrompue dès le début de chaque actionnement de la pédale et rétablie seulement à la fin de son relâchement ;
- des seconds moyens de valve (7a, 7c) commandés par la pédale pour établir une communication sélective entre la seconde chambre et la seconde source de pression, cette communication étant établie au cours de chaque actionnement de la pédale et interrompue dès le début de son relâchement ; et
- des troisièmes moyens de valve (12) montés en série avec les premiers moyens de valve et propre à établir une communication sélective supplémentaire entre les chambres,
caractérisé en ce que les troisièmes moyens de valve comprennent une valve inclinométrique sensible à l'inclinaison du véhicule pour interdire, au moins pour un sens et une amplitude déterminés d'inclinaison du véhicule, la communication entre les deux chambres.

2. Dispositif de freinage suivant la revendication 1, destiné à un véhicule à moteur équipé d'un mécanisme d'embrayage (25), caractérisé en ce qu'il comprend en outre des moyens de commande (24, 22, 21, 20) sensibles à un mouvement de ce mécanisme pour provoquer l'ouverture des troisièmes moyens de valve en réponse à ce mouvement.

## Claims

1. A braking device for motor vehicles, which in particular is equipped with a brake pedal (9) and a pneumatic brake-booster (1), the latter in turn comprising:
- first and second chambers (3a, 3b) sealingly separated by a movable wall (4) and connected, permanently in the case of the first and selectively by operation of the pedal in the case of the second, to respective first and second pressure sources (S, A) delivering pressures the difference between which is not zero, the operation of the pedal enabling brake-boosting work to occur as the result of a displacement of the movable wall through the action of said pressure difference;
- first pedal-controlled valve means (7a, 7b) for establishing selective communication between the two chambers, this communication being interrupted from the commencement of each operation of the pedal and being restored only at the end of its release;
- second pedal-controlled valve means (7a, 7c) for establishing selective communication between the second chamber and the second pressure source, this communication being established in the course of each operation of the pedal and interrupted on the commencement of its release, and
- third valve means (12) connected in series with the first valve means and adapted to establish additional selective communication between the chambers,
characterized in that the third valve means comprise an inclinometric valve reacting to the inclination of the vehicle to prevent, at least in a determined direction and at a determined amplitude of inclination of the vehicle, communication between the two chambers.

2. Braking device according to claim 1, intended for a motor vehicle equipped with a clutch mechanism (25), characterized in that in addition it comprises control means (24, 22, 21, 20) reacting to a movement of said mechanism to bring about the opening of the third valve means in response to said movement.

## Patentansprüche

1. Bremsvorrichtung für ein Motorfahrzeug, insbesondere versehen mit einem Bremspedal (9) und einem pneumatischen Unterstützungs-Servomotor (1), der wiederum enthält:
- eine erste und eine zweite Kammer (3a, 3b), die in dichter Weise durch eine bewegbare Wand (4) getrennt sind und im Falle der ersten Kammer permanent und im Falle der zweiten Kammer selektiv durch Betätigung des Bremspedals an eine erste bzw. eine zweite Druckquelle (S, A) angeschlossen sind, welche Drücke mit einer von Null verschiedenen Differenz liefern, wobei die Betätigung des Pedals ermöglicht, eine Bremsunterstützungsarbeit auftreten zu lassen, welche zu einer Verstellung der bewegbaren Wand unter der Wirkung dieser Druckdifferenz führt;
- erste Ventilmittel (7a, 7b), die von dem Pedal gesteuert sind, um eine selektive Verbindung zwischen den beiden Kammern auszubilden, wobei diese Verbindung mit dem Beginn jeder Betätigung des Pedals unterbrochen wird und nur am Ende seines Freigebens wieder ausgebildet wird;
- zweite Ventilmittel (7a, 7c), die von dem Pedal gesteuert sind, um eine selektive Verbindung zwischen der zweiten Kammer und der zweiten Druckquelle auszubilden, wobei diese Verbindung im Verlauf jeder Betätigung des Pedals ausgebildet wird und mit dem Beginn des Freigebens des Pedals unterbrochen wird; und
- dritte Ventilmittel (12), die in Reihe mit den ersten Ventilmitteln angebracht und in der Lage sind, eine zusätzliche selektive Verbindung zwischen den Kammern auszubilden,
dadurch gekennzeichnet, daß die dritten Ventilmittel ein neigungsempfindliches Ventil enthalten, welches auf die Neigung des Fahrzeugs anspricht, um für wenigstens eine vorbestimmte Richtung und eine vorbestimmte Amplitude der Neigung des Fahrzeugs die Verbindung zwischen den beiden Kammern zu verhindern.

2. Bremsvorrichtung nach Anspruch 1, vorgesehen für ein Motorfahrzeug, welches mit einem Kupplungsmechanismus (25) versehen ist, dadurch gekennzeichnet, daß sie außerdem Steuermittel (24, 22, 21, 20) aufweist, die auf eine Bewegung dieses Mechanismus ansprechen, um das öffnen der dritten Ventilmittel in Reaktion auf diese Bewegung zu bewirken.
